Europäisches Patentamt

European Patent Office

Office européen des brevets

(19)

(11) Publication number: **0 106 655**
**A2**

(12) # EUROPEAN PATENT APPLICATION

(21) Application number: 83306160.9

(22) Date of filing: 12.10.83

(51) Int. Cl.³: **C 08 L 67/06**
C 08 F 283/00, C 08 L 63/00

(30) Priority: 20.10.82 GB 8229987

(43) Date of publication of application:
25.04.84 Bulletin 84/17

(84) Designated Contracting States:
BE DE FR GB IT NL SE

(71) Applicant: The British Petroleum Company p.l.c.
Britannic House Moor Lane
London EC2Y 9BU(GB)

(72) Inventor: Fogg, Sidney George
The British Petroleum Co. p.l.c. Chertsey Road
Sunbury-on-Thames Middlesex TW16 7LN(GB)

(74) Representative: Krishnan, Suryanarayana
Kalyana et al,
BP INTERNATIONAL LIMITED Patents & Licensing
Division Chertsey Road
Sunbury-on-Thames Middlesex TW16 7LN(GB)

(54) Modified unsaturated polyester resins.

(57) The present invention relates to unsaturated polyester resin compositions modified by addition of a copolymerisable monomer and an epoxy resin to improve the physical properties of the composition. The copolymerisable monomer is one or more unsaturated organic compounds selected from carboxylic acids, carboxylic acid anhydrides, amines, amides, alcohols and thiols and the composition also contains an epoxy resin. The copolymerisable monomer may be a mixture of the unsaturated organic compound and a vinyl monomer selected from styrene, methyl methacrylate and vinyl toluene. The compositions after cure are particularly suitable for producing glass-fibre reinforced polymers to be made into shapes eg by wet lay up without use of compression moulds, or as sheet moulding compounds for construction of eg car bodies.

1

## MODIFIED UNSATURATED POLYESTER RESINS

The present invention relates to unsaturated polyester resin compositions modified by addition of a copolymerisable monomer and an epoxy resin to improve the physical properties of the composition.

Unsaturated polyesters are typically made from mixtures of phthalic anhydride and maleic anhydride and propylene glycol to form initially a prepolymer. About 10% excess propylene glycol is usually employed to give a prepolymer terminated with hydroxyl groups. Usually about 35% of a vinyl monomer such as styrene or vinyl toluene is added to the polyester prepolymer to reduce its viscosity and to prepare a copolymerisable composition. A small amount of inhibitor is generally added to prevent polymerisation during storage or transportation.

When ready for use a polymerisation catalyst is added. The inhibitor is destroyed by the catalyst and the so-called "pot life" of the prepolymer and vinyl monomer mix is dependent upon the choice of inhibitor and catalyst combination and temperature. Conventionally, if a relatively short pot life is desired, a low temperature catalyst promoter system such as methylethyl ketone peroxide and cobalt naphthenate is chosen.

Many modifications have been made to the basic system described above. For example, maleic anhydride has been replaced by fumaric acid, propylene glycol has been replaced by ethylene glycol and isophthalic acid has been used instead of phthalic anhydride. These modifications have enabled the physical characteristics of the polyester to be altered to meet the desired end result such as

1

brittleness, stiffness, resistance to high temperature or moisture or the solubility of the prepolymer in the vinyl monomer used. Such variations are intended to generate a polyester resin which upon curing shows some improvement in its characteristics.

It has now been found that by a suitable choice of vinyl monomers to be copolymerised with the prepolymer and by inclusion of an epoxy resin the physical characteristics of the polyester resin can be improved significantly, especially in respect of its high temperature stability.

Accordingly, the present invention is a composition comprising an unsaturated polyester prepolymer and a copolymerisable monomer, characterised in that the copolymerisable monomer comprises one or more unsaturated organic compounds selected from carboxylic acids, carboxylic acid anhydrides, amines, amides, alcohols and thiols and that the composition contains an epoxy resin.

Any of the conventional unsaturated polyester prepolymers described above may be used in the compositions of the present invention. For instance the prepolymer may be derived from a mixture of phthalic anhydride, maleic anhydride and a glycol such as ethylene glycol or propylene glycol. Such prepolymers are dissolved in a vinyl monomer which may be styrene, methyl methacrylate or vinyl toluene.

The amount of copolymerisable monomer in said compositions is preferably from 15 to 50 parts by weight, more preferably from 30 to 45 parts by weight per hundred parts of the polyester in the final composition.

The copolymerisable monomer preferably comprises a mixture of the unsaturated organic compound referred to above and a vinyl monomer selected from styrene, methyl methacrylate and vinyl toluene. Examples of these unsaturated compounds include . mono-carboxylic acids such as acrylic acid and its homologues; dicarboxylic acids such as maleic and fumaric acids and their homologues; anhydrides such as maleic anhydride and tetrahydrophthalic anhydride; primary aliphatic amines such as allyl amine; secondary aliphatic amines such as N-allyl cyclohexylamine;

aromatic amines such as N-allyl aniline; amides such as acrylamide and dialkyl urea; alcohols such as allyl alcohol, its homologues and cycloaliphatic alcohols such as cyclohexenol; phenols such as 2-allyl phenol; and thiols such as allyl mercaptan. The unsaturated organic compound is suitably a carboxylic acid or anhydride. The carboxylic acid or anhydride should preferably be compatible with the vinyl monomer if a mixture of the two is used.

The ratio of the unsaturated organic compound acid to the vinyl monomer in the composition is suitably from 0.02:1 to 2:1 by weight, preferably from 0.1:1 to 1:1 by weight.

The epoxy resin in the composition is suitably the diglycidyl ether of bisphenol-A. The amount of epoxy resin in the composition is suitably from 0.5 to 80 parts by weight per hundred parts of the polyester in the total composition, preferably from 1 to 50, and more preferably from 2 to 20 parts by weight per 100 parts of the polyester in the total composition.

The composition thus produced may contain the usual inhibitors eg catechols, such as hydroquinone or t-butyl catechol, to facilitate storage.

In order to copolymerise the components in the composition conventional initiators such as methylethyl ketone peroxide or benzoyl peroxide may be used. In addition conventional accelerators such as the naphthenates of cobalt or manganese, or N,N-dimethylaniline may be used.

The compositions of the present invention may be cured in the presence of the initiator and the accelerator either at room temperature or by moderate heating. The cured compositions are particularly suitable for use as a binder for glass fibres, especially for producing glass-fibre reinforced polymers, to be made into shapes eg by wet lay up without use of compression moulds, or as sheet moulding compounds for construction of eg car bodies.

The present invention is further illustrated with reference to the following Example and Comparative Tests.

Comparative Test 1- not according to the invention

A polyester composed of maleic anhydride, adipic acid and diethylene glycol with a styrene monomer content of 35% was used.

3

50g of polyester was taken and 0.50g of a 6% solution of cobalt naphthenate in styrene was added. After mixing thoroughly, 1.0g of 50% methyl ethyl ketone peroxide (MEKP) was mixed therewith. The resin composition so formed was then cast between glass plates coated with polyvinyl alcohol (PVA) release agent and fitted with a nitrile rubber gasket. After curing at room temperature the resulting sheet (10 x 20 x 0.3 cm approx) was post-cured at 65°C for a minimum of 16 hours.

Dumbell-shaped test pieces were cut and milled from the sheet such that the cross-sectional area of the narrow section was between 13 and 15 $mm^2$. The pieces were then used to determine ultimate tensile stress and % strain at failure. An Instron tensile-testing machine was employed, with the cross-head speed being set at 1 mm/min. An average for two samples was recorded. The results are shown in Table 1.

Comparative Test 2 - not according to the invention

The polyester used was as in Comparative Test 1.

5g of methacrylic acid was thoroughly mixed with 50g of polyester. Cobalt naphthenate and MEKP were then added as described in Test 1 and the resin cast into a sheet.

Samples were cut from the sheet as before and the ultimate tensile-stress and % strain at failure were recorded. The results are shown in Table 1.

Comparative Test 3 - not according to the invention

The polyester used was that described in Comparative Test 1.

45g of polyester and 5g of an epoxide resin based on the diglycidylether of Bisphenol A were mixed together. Cobalt naphthenate and MEKP were added as described in Test 1 and the resin cast into a sheet as previously described. The stress/strain results on the sheets produced are shown in Table 1.

Example

A polyester/epoxide blend was prepared as described in Comparative Test 3. 5g of methacrylic acid was then mixed with the blend followed by addition of 0.5g cobalt napthenate and 1.0g MEKP. The resin so produced was cast into a sheet as described in Comparative Test 1. The stress/strain results are shown in Table 1.

Table 1

| Experiment | Ultimate Tensile Stress $mN/m^2$ | % strain at failure |
|------------|----------------------------------|---------------------|
| Test 1 | 42.4 | 11.2 |
| Test 2 | 55.9 | 8.7 |
| Test 3 | 29.9 | 10.7 |
| Example | 46.7 | 15.2 |

The Example according to the invention shows increases in both ultimate tensile stress and % strain at failure relative to Test 1 (pure polyester).  Test 2 shows an increase in tensile stress but a reduction in % strain at failure, indicating that a more brittle material has been produced.  Test 3 shows reductions in both tensile stress and % strain at failure, indicating that a weak material has been produced.  Only an addition of both methacrylic acid and the epoxide resin (Example) increases both the tensile stress and the % strain at failure indicating that a stronger, less brittle, product has been formed.

Claims:

1. A composition comprising an unsaturated polyester prepolymer and a copolymerisable monomer characterised in that the copolymerisable monomer comprises one or more unsaturated organic compound selected from carboxylic acids, carboxylic acid anhydrides, amines, amides, alcohols and thiols and that the composition contains an epoxy resin.

2. A composition according to claim 1 wherein the unsaturated polyester prepolymer is derived from a mixture of phthalic anhydride, maleic anhydride and a glycol.

3. A composition according to claim 1 or 2 wherein the copolymerisable monomer is a mixture of the unsaturated organic compound and a vinyl monomer selected from styrene, methyl methacrylate and vinyl toluene.

4. A composition according to any one of the preceding claims wherein the amount of copolymerisable monomer in said composition is from 15 to 50 parts by weight per hundred parts of the polyester in the final composition.

5. A composition according to any one of the preceding claims wherein the unsaturated organic compound is selected from one or more of mono-carboxylic acids and their homologues; dicarboxylic acids and their homologues; anhydrides; primary aliphatic amines; secondary aliphatic amines; aromatic amines; amides; open chain or cyclo-aliphatic alcohols and their homologues; phenols; and thiols.

6. A composition according to any one of the preceding claims wherein the unsaturated organic compound is selected from one or more of acrylic acid, maleic acid, fumaric acid, maleic anhydride, tetrahydrophthalic anhydride, allyl amine, N-allyl cyclohexylamine, N-allyl aniline, acrylamide, dialkyl urea, allyl alcohol, cyclohexenol, 2-allyl phenol and allyl mercaptan.

7. A composition according to any one of the preceding claims wherein the ratio of the unsaturated organic compound to the vinyl monomer in the copolymerisable monomer is from 0.02:1 to 2:1 by weight.

8. A composition according to any one of the preceding claims wherein the amount of epoxy resin in the composition is from 0.5 to 80 parts by weight per hundred parts of the polyester in the total composition.

9. A composition according to any one of the preceding claims wherein the epoxy resin in the composition is the diglycidyl ether of bisphenol-A.

10. A composition according to any one of the preceding claims wherein the components in the composition are copolymerised using methylethyl ketone peroxide or benzoyl peroxide as initiators.